# EUROPEAN PATENT SPECIFICATION

(11) **EP 4 136 976 B1**
(45) Date of publication and mention of the grant of the patent: **28.01.2026**
(21) Application number: 22190797.5
(22) Date of filing: 17.08.2022
(51) Int. Cl.: A21B 3/04, F24C 15/32

(54) **SELF-CLOSING WATER TANK DRAWER**
SELBSTSCHLIESSENDE WASSERTANKSCHUBLADE
TIROIR DE RÉSERVOIR D'EAU À FERMETURE AUTOMATIQUE

(30) Priority: 17.08.2021 TR 202113003
(43) Date of publication of application: 22.02.2023
(73) Proprietor: Renta Elektrikli Ev Aletleri Sanayi Ve Dis Ticaret Limited Sirketi, Atasehir/Istanbul (TR)
(72) Inventor: SONMEZ, OSMAN, Eskisehir (TR); VARDAR, OSMAN, Eskisehir (TR)
(74) Representative: Kaya, Erdem

(56) References cited:
- WO-A1-2020/078836
- DE-A1- 4 427 460
- FR-A1- 2 958 721
- US-A1- 2014 251 304
- US-A1- 2020 138 229
- US-B2- 10 645 765

## Description

### Technical Field of the Invention

The present invention relates to a system for use in the ovens, preventing the customer from adding more water than needed by means of a self-closing water drawer in proportion to the amount of water filled.

### State of the Art

Current systems have a sensor that determines the amount of water filled into the water tank from the oven water drawer. Said sensor warns the customer not to add more water when the water tank is full. However, even in this case, adding water to the system is still at the discretion of the customer. Another problem in this system is the possible malfunction of the level measuring sensor in the water tank. In this case, the water added more than required is discharged to the oven cooking region through a separate overflow system. There are still water leakage risks throughout this water circulation. In this case, for the safety of the user, the water overflowing into the oven cooking region should be removed from the oven before cooking.

The patent document numbered "US5901642A" in the state of the art relates to a high efficiency fuel-saving drawer type steam cabinet, and more particularly to a steam cabinet exclusively designed for steaming and keeping warm various types of soup. The purpose of the invention is to provide a highly efficient drawer type steam cabinet by providing folded plates, each with an inclined or slanting plane. There is a buoy control valve in the water tank. The buoy control valve includes a buoy inside a tube provided with holes in its outer circumference. The top of said tube was connected to the bottom of the water storage passage. Water, when heated in the water tank, will be gradually lost due to evaporation, once the water level drops, the buoy will drop to allow reserve water to enter. When the water level drops, the water in the bottle in the system feeds the reserve water to the water storage passage. Also, the buoy on the buoy control valve shut off the water supply to automatically maintain water refill by the water tank. In the system described in the invention, although the water inlet is closed, the user can add water if he/she desires. In said system, although the water tank is closed with a buoy when it is full, there is no system in which the drawer is completely hidden, and excess water is prevented from entering the system. In addition, in this system, there is a need for a second storage that feeds the system. Water must be added to the system as much as the amount of evaporated water. The way closed by the buoy is suitable to demonstrate a waterproofing problem. In this case, the water in the reserve tank runs out and even if the system continues to operate, the water inlet path remains completely open, and steam is discharged from this area.

The patent document numbered "CN105333467A" relates to home appliances and in particular an oven, where water can be added to the water storage tank while the oven is operating. According to an embodiment of the invention, it includes a water level detecting device installed in the water tank and connected to the control unit. The water level detecting device is installed in the water storage tank and can output different signals to the control unit by detecting the level of the water level in the water tank, and the control unit can monitor the water level in the water storage tank. In another embodiment of the invention, there is a water level detection buoy to detect the water level in the water tank. The water level detecting buoy detects the level of the water level in the water tank, and outputs different signals to the controller to give the user a prompt message when the water tank is filled with water and the water in the water tank is insufficient; the solenoid valve passes the current through and controlling the circulation and the cutoff of the water flow in the first connecting pipe. In said system, signals are sent to the control unit depending on the buoy movement of a sensor moving only on the buoy. Thus, only the fill rate of the tank is displayed. The user may continue to add water to the system if he/she desires and may cause the water to overflow.

The patent document numbered "CN106461204A" in the state of the art relates to a method for operating an evaporator provided with a heating section for operating a home device. In this system, there is a detector for detecting a predetermined level. While the detector generally controls the temperature, it also provides a warning in case of overheating. There is a water level detector in the part where the water is located. This detector is built into the water chamber. It is mentioned that the detector that enables measuring the water level may be a buoy or a similar structure. The buoy or similar structure may be triggered in a mechanical or magnetic manner. For example, the level detector may be configured as an electrical switch. The electrical switch may, for example, have two electrodes, and the electrodes can be electrically connected to each other by the liquid when the liquid reaches the predetermined level. It is also mentioned that the level detector may also have optical, capacitive, and / or other devices for detecting a situation that meets or exceeds the predetermined level. Said system only refers to a detector moving only on the buoy triggers a detector connected to the water tank. The buoy is located inside the water evaporator, and it signals when the heater will be activated and deactivated according to the buoy position.

The patent document numbered "WO 2020/078836 A1" in the state of the art relates to a steam cooking appliance and to a method for operating a steam cooking appliance. The steam cooking appliance and the method for operating a steam cooking appliance suggested in the present application are configured to displace the water tank from the operative position to the non-operative position if it is detected that the steam system might require a refill with water. The method comprising displacing the water tank from the operative position to the non-operative position when the steam cooking appliance detects that the steam system might require a re-fill with water.

The patent document numbered "FR 2 958 721 A" in the state of the art relates to a cooking oven comprising a water filling drawer supplying water by means of a hydraulic circuit to a steam generator diffusing steam inside a cooking cavity during cooking cycles ana a device for controlling said water filling drawer. The object of the present invention is to resolve to propose a cooking oven making it possible to control a water-filling drawer automatically so as to guarantee the safety of the user and of said cooking oven.

Consequently, the disadvantages disclosed above and the inadequacy of available solutions in this regard necessitated making an improvement in the relevant technical field.

### Brief Description and Objects of the Invention

The most important object of the present invention is to develop a system in which the customer is prevented from adding more water with the self-closing water drawer by means of the buoy thereof, in proportion to the amount of water filled. Thus, it is aimed to prevent malfunctions that occur by adding more water to the system than required.

Another object of the present invention is to develop a system that does not require a tank water level sensor in ovens and an extra discharge system for the discharge of excess water added therein.

Another object of the present invention is to develop a system in which the possible risks of water leakage from the hoses in the discharge system of excess water can be prevented by not using the discharge system.

Another object of the present invention is to develop a system in which water addition can be prevented by hiding the drawer completely in cases where excess water should not be added to the system.

Structural and characteristic features of the present invention as well as all advantages thereof will become clear through the attached figures and the following detailed description provided by making references thereto.

### Description of the Figures

**FIGURE-1** is the drawing that illustrates the self-closing water drawer of the present invention in an empty state ready to add water.
**FIGURE-2** is the drawing that illustrates the detailed view of the self-closing water drawer of the present invention, on the cooking device in an empty and open state ready to add water.
**FIGURE-3** is the drawing that illustrates the view of the self-closing water drawer of the present invention, as automatically closed and full of water after adding water.
**FIGURE-4** is the drawing that illustrates a detailed view of the self-closing water drawer of the present invention, on the self-closing and water-filled cooking device after adding water.

### Description of Elements/Parts of the Invention

Parts shown in the figures are enumerated and numbers corresponding the respective parts are provided below in order to provide a better understanding for the system ensuring that the water tank in steam assisted ovens is self-closed when water is filled by the user, by means of the present invention.
1. Tank
2. Tank cover
3. Drawer board
4. Drawer
5. Arm
6. Articulated arm
7. Compression spring
8. Buoy arm
9. Buoy

### Detailed Description of the Invention

The present invention relates to a system that enables the water tank in steam-assisted ovens to be self-closed when water is filled by the user. The present invention particularly relates to a system in which the customer is prevented from adding more water than required. The excess amount of water that the system may use and receive is stated as a surplus.

The present invention comprises tank (1), tank cover (2), drawer board (3), drawer (4), arm (5), articulated arm (6), compression spring (7), buoy arm (8), and buoy (9).

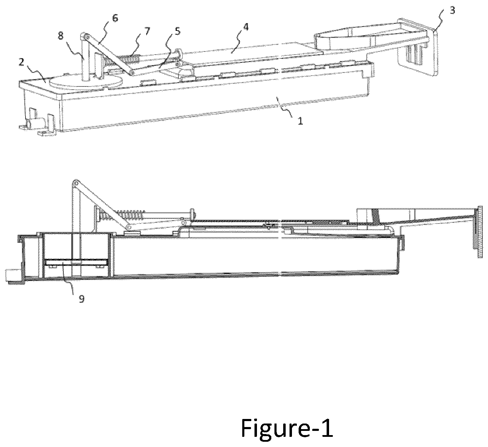

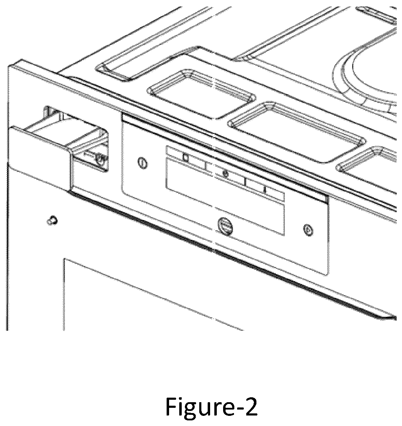

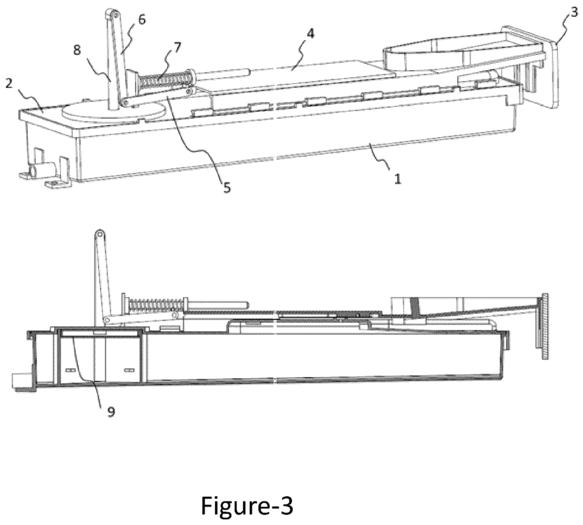

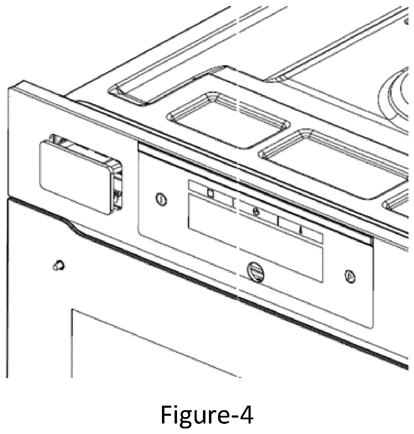

In the figures that assist to explain the present invention; Figure-1 illustrates the empty and open view of the self-closing drawer (4), ready to add water; Figure 2 illustrates the position of the drawer (4) ready to add water in an empty and open state on the cooking device; Figure-3 illustrates the side and detailed view of the self-closing drawer (4) after filling with water; and Figure-4 illustrates the view of the self-closing drawer (4) after filling the water on the cooking device.

The system is in its initial position as seen in Figure-1. As seen in Figure-2 on the oven, the customer adds water to the drawer (4) protruding from the oven control panel to be used in the system. The drawer (4) can move on the nail beds of the tank cover (2). In case the user adds water to the drawer (4), water is primarily collected in the rear region of the tank (1) by means of the maximum slope of the drawer (4) of two degrees. The slope used in the drawer (4) is preferably chosen as one degree in the present invention.

The water collected in tank (1) starts to move the buoy (9) upwards after one-third level of the tank (1). As the water level rises, the vertical upward movement of the buoy (9) raises the buoy arm (8) at the same rate. The drawer (4) is also connected to the buoy (9) with a three-armed configuration and moves horizontally, completely closing the water inlet to the drawer (4). The three-armed configuration consists of the arm (5), the articulated arm (6), and the buoy arm (8).

The arm (6) and the articulated arm (5) to the buoy arm (8) move, pulling the drawer (4) inwards, and the system comes to the closed position in Figure-3. By means of the fact that the drawer (4) is completely hidden, adding water to the system is completely prevented in cases where it is not necessary to add water. That is, the user cannot add water while the drawer (4) is in this position, even if it is desired. In this position, the buoy (9) is now resting on the tank cover (2). Therefore, the movement of the system stops.

As shown in Figure-3, the system, which remains immobile, comes to zero when the user pushes the drawer panel (3), which is glued to the drawer (4), manually. In this position, the drawer (4) and the tank cover (2) lock each other. This locking process is in the form of a push lock. At the same time, the compression spring (7) is installed in the pressed position. The compression spring (7) ensures that the drawer (4) comes to the position in Figure-4 by the thrust of the compression spring (7), when the customer pushes the drawer (4) manually in the fully closed position and releases the push-lock system. The reason for this is that the customer can then easily pull the drawer (4) out of its place and bring it to a state in Figure-2.

The tank cover (2) is fixed to the tank (1) by means of plastic nails. Since the system is locked in the form of a push-lock, the buoy (9) remains at its highest point, even when the water in the tank (1) is consumed. The drawer (4), which is locked with a push lock, keeps the buoy (9) fixed. The push lock system is that when the user pushes the drawer panel (3) with a hand movement, it is closed and opened by pushing the drawer panel (3) in the same way to open it.

When it is desired to re-add water to the system, the drawer panel (3) is pushed manually, making the push-lock system release between the drawer (4) and the tank cover (2). The drawer (4) is pushed outwards by itself with the force of the compression spring (7) and comes to the position shown in Figure-4. The user then pulls the free drawer (4) manually and brings it to the position in figure 2.

By means of the articulated arm (6) and the buoy arm (8), the arm (5) allows the buoy (9) to move at a distance of "x" and the drawer (4) to be retracted by 2x. In this case, it increases the limit of the dimensions that the drawer will come out such that water can be added more easily.

A 23 mm lift-off in the buoy (9) provides 47 mm of retraction in the drawer (4). By means of this ratio and the correctly selected lengths of these arms, the correct positioning of the articulated arm (6), the arm (5), and the buoy arm (8) is provided so that they function together. Since the depth of the water tank is limited and the movement of the buoy starts after a certain amount of water is filled, this ratio should be increased as designed. By means of this increased ratio, the drawer (4) can come out from the first position by about 60 mm, and it can be much more comfortable for the customer to add water.

## Claims

1. A self-closing water tank drawer system that closes a water tank (1) in steam-assisted ovens when water is filled by the user, comprising;
• A drawer (4) that is connected to a buoy (9) with an arm (5), an articulated arm (6) and a buoy arm (8), and prevents extra water inflow by moving horizontally simultaneously with the buoy (9), that performs the horizontal movement on nail beds of a tank cover (2), that has a maximum inclination of two degrees and thereby allowing the water added by the user to be collected in the rear region of the tank (1), to which the tank cover (2) is fixed by means of plastic nails, wherein the arm (5) provides the connection between the drawer (4) and a articulated arm (6), enabling the drawer (4) to move simultaneously with the buoy (9), wherein the articulated arm (6) provides the connection between the arm (5) and the buoy arm (8), wherein the buoy arm (8) allows the drawer (4) to be pulled inwards with the vertical movement of the buoy (9) by means of the articulated arm (6) and arm (5) to which it is connected, wherein the buoy (9) allows the drawer (4) to enter horizontally by connecting to the drawer (4) with the buoy arm (8), the arm (5) and the articulated arm (6), and that moves upwards after the one-third of the tank (1) is filled.

2. A self-closing water tank (1) drawer system according to Claim 1, comprising; a push-lock system that is positioned between the buoy (9) and the drawer (4) and that keeps the drawer (4) fixed in the closed position in order to prevent extra water intake.

3. A self-closing water tank (1) drawer system according to Claim 1, comprising; a push-lock system that allows the drawer (4) and the tank cover (2) to release by pushing a drawer panel (3) manually when water is desired to be added to the system again, and a compression spring (7) that enables the drawer (4) to come to the self-closing position from fully closed position when filled with water.

4. A self-closing water tank (1) drawer system according to Claim 1, wherein the drawer (4) has a one-degree inclination and thereby allowing the water added by the user to be collected in the rear region of the tank (1).

## Patentansprüche

1. Selbstschließendes Wassertank-Schubladensystem, das einen Wassertank (1) in dampfunterstützten Öfen schließt, wenn Wasser vom Benutzer eingefüllt wird, umfassend:
• eine Schublade (4), die mit einer Boje (9) verbunden ist, einen Arm (5), einen Gelenkarm (6) und einen Bojenarm (8) aufweist und einen zusätzlichen Wasserzufluss verhindert, indem er sich gleichzeitig mit der Boje (9) horizontal bewegt, die die horizontale Bewegung auf Nagelbetten eines Tankdeckels (2) ausführt, die eine maximale Neigung von zwei Grad aufweist, wodurch das vom Benutzer hinzugefügte Wasser im hinteren Bereich des Tanks (1) gesammelt werden kann, an dem der Tankdeckel (2) mittels Kunststoffnägeln befestigt ist, wobei der Arm (5) die Verbindung zwischen der Schublade (4) und einem Gelenkarm (6) herstellt, wodurch sich die Schublade (4) gleichzeitig mit der Boje (9) bewegt werden kann, wobei der Gelenkarm (6) die Verbindung zwischen dem Arm (5) und dem Bojenarm (8) herstellt, wobei der Bojenarm (8) es ermöglicht, die Schublade (4) mit der vertikalen Bewegung der Boje (9) mittels des Gelenkarms (6) und dem Arm (5), mit dem er verbunden ist, in sich aufzunehmen, wobei die Boje (9) es ermöglicht, dass die Schublade (4) horizontal einfährt, indem sie mit dem Bojenarm (8), dem Arm (5) und dem Gelenkarm (6) mit der Schublade (4) verbunden wird, und sich nach dem Füllen eines Drittels des Tanks (1) nach oben bewegt.

2. Selbstschließendes Wassertank (1)-Schubladensystem gemäß Anspruch 1, umfassend: ein Druckverschlusssystem, das zwischen der Boje (9) und der Schublade (4) positioniert ist und die Schublade (4) in der geschlossenen Position fixiert hält, um eine zusätzliche Wasseraufnahme zu verhindern.

3. Selbstschließendes Wassertank (1)-Schubladensystem gemäß Anspruch 1, umfassend: ein Druckverschlusssystem, das es ermöglicht, die Schublade (4) und den Tankdeckel (2) durch manuelles Drücken der Schubladenblende (3) zu entriegeln, wenn Wasser wieder in das System eingefüllt werden soll, und eine Druckfeder (7), die es ermöglicht, dass die Schublade (4) aus der vollständig geschlossenen Position in die selbstschließende Position kommt, wenn sie mit Wasser gefüllt ist.

4. Selbstschließendes Wassertank (1)-Schubladensystem gemäß Anspruch 1, wobei die Schublade (4) eine Neigung von einem Grad aufweist, wodurch das vom Benutzer eingefüllte Wasser im hinteren Bereich des Tanks (1) gesammelt werden kann.

## Revendications

1. Un système de tiroir à fermeture automatique pour réservoir d'eau qui ferme un réservoir d'eau (1) dans les fours à assistance vapeur lorsque l'utilisateur remplit le réservoir d'eau, comprenant:
• Un tiroir (4) qui est relié à une bouée (9) par un bras (5), un bras articulé (6) et un bras de bouée (8), et qui empêche l'entrée d'eau excessive en se déplaçant horizontalement simultanément avec la bouée (9), qui effectue le mouvement horizontal sur les lits de clous d'un couvercle de réservoir (2), présentant une inclinaison maximale de deux degrés et permettant ainsi à l'eau ajoutée par l'utilisateur d'être collectée dans la partie arrière du réservoir (1) à laquelle le couvercle du réservoir (2) est fixé au moyen de clous en plastique, dans lequel le bras (5) assure la connexion entre le tiroir (4) et un bras articulé (6), permettant au tiroir (4) de se déplacer simultanément avec la bouée (9), dans lequel le bras articulé (6) assure la connexion entre le bras (5) et le bras de la bouée (8), dans lequel le bras de bouée (8) permet au tiroir (4) d'être tiré vers l'intérieur avec le mouvement vertical de la bouée (9) au moyen du bras articulé (6) et du bras (5) auquel il est relié, dans lequel la bouée (9) permet au tiroir (4) d'entrer horizontalement en se connectant au tiroir (4) avec le bras de bouée (8), le bras (5) et le bras articulé (6), et qui se déplace vers le haut une fois que le tiers du réservoir (1) est rempli.

2. Un système de tiroir à fermeture automatique pour réservoir d'eau (1) selon la Revendication 1, comprenant; un système de verrouillage à pression qui est positionné entre la bouée (9) et le tiroir (4) et qui maintient le tiroir (4) fixé en position fermée afin d'empêcher toute entrée d'eau excessive.

3. Système de tiroir à fermeture automatique pour réservoir d'eau (1) selon la Revendication 1, comprenant: un système de verrouillage par poussée qui permet au tiroir (4) et au couvercle du réservoir (2) de se libérer en poussant manuellement le panneau du tiroir (3) lorsque l'on souhaite ajouter à nouveau de l'eau au système, et un ressort de compression (7) qui permet au tiroir (4) de passer de la position complètement fermée à la position de fermeture automatique lorsqu'il est rempli d'eau.

4. Système de tiroir à fermeture automatique pour réservoir d'eau (1) selon la Revendication 1, dans lequel le tiroir (4) est incliné d'un degré, ce qui permet à l'eau ajoutée par l'utilisateur d'être recueillie dans la zone arrière du réservoir (1).
